# EUROPÄISCHE PATENTSCHRIFT

(11) **EP 2 462 794 B1**
(45) Veröffentlichungstag und Bekanntmachung des Hinweises auf die Patenterteilung: **28.11.2018**
(21) Anmeldenummer: 11192836.2
(22) Anmeldetag: 09.12.2011
(51) Int. Cl.: A01B 63/10, A01B 63/111, A01C 9/00

(54) **Landwirtschaftliche Maschine**
Agricultural machine
Machine agricole

(30) Priorität: 10.12.2010 DE 102010062861
(43) Veröffentlichungstag der Anmeldung: 13.06.2012
(73) Patentinhaber: Heiss, Andreas, 85104 Pförring-Dötting (DE)
(72) Erfinder: Heiss, Andreas, 85104 Pförring-Dötting (DE)
(74) Vertreter: Bergmeier, Werner

(56) Entgegenhaltungen:
- WO-A1-2006/087298
- GB-A- 2 184 331
- NL-C2- 1 014 691

## Beschreibung

Die vorliegende Erfindung betrifft eine landwirtschaftliche Maschine mit wenigstens einem Werkzeug. Die landwirtschaftliche Maschine kann als Aushebemaschine ohne Fahrwerk vorgesehen sein und ist über einen hydraulischen Kraftheber mit wenigstens einen Hubzylinder heb- und senkbar an einen Schlepper anschließbar. Die Maschine kann auch als gezogene Maschine mit einem eigenen Fahrwerk ausgeführt sein, wobei die Maschine über wenigstens einen Hubzylinder zum Ausheben von wenigstens einem Werkzeug verfügt. Die gezogene Maschine ist an eine Deichsel eines Schleppers anschließbar.

Um bei landwirtschaftlichen Maschinen die Arbeitstiefe der Werkzeuge zu regeln, sind im Stand der Technik verschiedene Systeme bekannt geworden. Gezogene Maschinen verfügen beispielsweise über einen Hubzylinder zum Ausheben des Werkzeugs, durch welchen die Arbeitstiefe vom Fahrer mittels einer manuellen Steuerung auf einen gewünschten Wert eingestellt werden kann. Eine Einhaltung einer konstanten Arbeitstiefe ist hiermit nicht möglich.
Aushebemaschinen werden an die Dreipunktkupplung eines Schleppers angeschlossen und durch die Lenker des Schleppers in ihrer Lage bezüglich des zu bearbeitenden Bodens geregelt. Moderne Schlepper verfügen hierzu über eine elektronische Hubwerksregelung (EHR), bei welcher entweder die Zugkraft oder die Lageänderung der angebauten Aushebemaschine an den Lenkern des Schleppers erfasst wird. Hierzu können Kraftmesseinrichtungen an den Lenkern sowie ein Positionssensor im Bereich der Dreipunktkupplung vorhanden sein, um die Zugkraft oder Lage während des Betriebs zu messen. Mittels der elektronischen Hubwerksregelung sind die bekannten Regelungen Zugkraftregelung, Lageregelung, Mischregelungen sowie Schwimmstellung möglich. Die Art der Regelung wird in Abhängigkeit des Werkzeugs, das an der landwirtschaftlichen Maschine angeordnet ist, ausgewählt. Beispielsweise wird bei Pflügen oder Lockerungswerkzeugen, wie beispielsweise einem Zinkenrotor, die Zugkraftregelung eingesetzt. Nachteilig bei den genannten Regelungsverfahren ist es, dass Schwankungen in der Bodenbeschaffenheit sowie Unebenheiten des Bodens oder vorausseilende Bewegungen und Schwingungen des Schleppers nicht ausreichend ausgeglichen werden können.

Die DE 32 35 818 A1 zeigt einen Anbaupflug, welcher als Aushebemaschine an einen Schlepper ankoppelbar ist, jedoch zusätzlich über ein eigenes Stützrad verfügt. Durch einen Messwertgeber ist die Höhenlage des Stützrads ermittelbar und durch die EHR des Schleppers über einen eigenen Zylinder verstellbar, so dass die Lage des Anbaupflugs zusätzlich geregelt werden kann. Zusätzlich sind Drehzahlgeber im Bereich des Stützrads sowie eines Hinterrads des Schleppers angeordnet. Es kann somit sowohl die Arbeitstiefe des Anbaupflugs geregelt werden, als auch bei Überschreiten eines bestimmten Schlupfwerts eine schlupfabhängige Regelung vorgenommen werden. Die EHR des Schleppers muss hierzu jedoch herstellerseitig auf die Regelung abgestimmt werden, nachträgliche Modifikationen an der EHR sind in der Regel nicht möglich.

Um eine von Schlepperschwingungen unabhängige Lage der Werkzeuge der Aushebemaschine und somit eine verbesserte Tiefenführung zu erreichen, schlägt die DE 35 01 568 A1 vor, die Absolutbewegung der Aushebemaschine direkt an der Maschine bzw. am Bodenbearbeitungswerkzeug mittels eines Bewegungssensors, beispielsweise eines Beschleunigungsaufnehmers, zu erfassen. Im Gegensatz zu üblichen Regelungen, bei welchen Lage- oder Zugkraft an den Lenkern des Schleppers abgegriffen werden, bildet somit die Absolutbewegung der Aushebemaschine die Regelgröße für die EHR des Schleppers.

In ähnlicher Weise sieht die DE 36 11 414 A1 vor, Kraftaufnehmer oder Lagesensoren direkt an den Werkzeugen der Aushebemaschinen anzuordnen. Diese Signale wirken wiederum auf das schleppereigene Steuergerät der EHR, welche entsprechend die Hubzylinder der Dreipunktkupplung betätigt.

Die GB 2 184 331 A zeigt einen Pflug, der als Aushebemaschine an eine Dreipunktkupplung eines Schleppers anschließbar ist. Die Arbeitstiefe des Pfluges wird durch einen am Pflug angebrachten Abstandssensor erfasst. Nach einer ersten Variante wird das Signal des Sensors lediglich aufbereitet und angezeigt und eine manuelle Korrektur der Arbeitstiefe durch den Bediener vorgenommen, der hierzu den Hubzylinder betätigt. Nach einer anderen Variante kann eine automatische Regelung der Arbeitstiefe vorgesehen sein. Auch hier wirkt jedoch das Signal des Sensors auf das schleppereigene Steuergerät, das entsprechend den Hubzylinder des Schleppers betätigt.

Die DE 199 45 853 A1 zeigt einen als Aushebemaschine ausgeführten Pflug, welcher ebenfalls über ein zusätzliches Stützrad verfügt. Das Stützrad ist mittels eines Hydraulikzylinders über die EHR des Schleppers ansteuerbar, um die Höhenlage des Pflugs durch Höhenverstellung des Stützrads zu ändern. Die Nachführung der Stützradposition erfolgt hierbei als Slavefunktion der Regelung der Hubwerkslage als Masterfunktion. Die Hauptfunktion der Hubwerksregelung ist hierbei in üblicher Weise in Lageregelung, Zugkraftregelung oder Mischregelung möglich.

Nachteilig bei den genannten Lösungen ist es, dass diese abhängig von der elektronischen Hubwerksregelung des Schleppers sind, welche bereits herstellerseitig für jeden Schlepper entsprechend abgestimmt werden muss.

Aufgabe der vorliegenden Erfindung ist es, eine landwirtschaftliche Maschine vorzuschlagen, welche eine von der elektronischen Hubwerksregelung des Schleppers unabhängige Verbesserung der Tiefenführung der Werkzeuge ermöglicht.

Die Aufgabe wird gelöst mit den Merkmalen des Anspruchs 1.

Eine landwirtschaftliche Maschine ist als Aushebemaschine ohne Fahrwerk ausgeführt und weist wenigstens ein Werkzeug auf. Die landwirtschaftliche Maschine ist über einen hydraulischen Kraftheber mit wenigstens einem Hubzylinder heb- und senkbar an einen Schlepper anschließbar, welcher über eine elektronische Hubwerksregelung (EHR) verfügt, die ein elektronisches Steuergerät sowie einen Steuerblock mit Regelventilen beinhaltet. An der landwirtschaftlichen Maschine ist eine Vorrichtung zur Regelung der Arbeitstiefe des wenigstens einen Werkzeugs angeordnet, wobei mittels der Vorrichtung zur Regelung der Arbeitstiefe im Betrieb wenigstens ein Hubzylinder des hydraulischen Krafthebers des Schleppers ansteuerbar ist.

Dadurch, dass erfindungsgemäß die Vorrichtung zur Regelung der Arbeitstiefe direkt an dem Anbaugerät angeordnet ist, kann diese unabhängig von der elektrohydraulischen Regelungseinrichtung des Schleppers arbeiten und statt dieser auf den wenigstens einen Hubzylinder des hydraulischen Krafthebers des Schleppers wirken. Im Gegensatz zu den Vorrichtungen des Stands der Technik kann die landwirtschaftliche Maschine daher herstellerunabhängig mit den verschiedensten Schleppern betrieben werden, ohne dass der Schlepper bzw. die EHR des Schleppers auf die landwirtschaftliche Maschine abgestimmt sein muss. Hierdurch kann bei Aushebemaschinen verschiedenster Art bzw. mit verschiedensten Werkzeugen eine Verbesserung der Tiefenführung der Werkzeuge erreicht werden.

Die maschineneigene Vorrichtung zur Regelung der Arbeitstiefe steuert hierbei entweder direkt mittels maschineneigener elektrischer oder hydraulischer Einheiten wenigstens einen Hubzylinder des hydraulischen Krafthebers des Schleppers an.

Die Vorrichtung umfasst zumindest einen an der Maschine angeordneten Sensor zur Erfassung der Arbeitstiefe des Werkzeugs. Die Vorrichtung zur Regelung der Arbeitstiefe umfasst neben dem wenigstens einen Sensor ein maschineneigenes elektrisches oder elektronisches Steuergerät. Im Betrieb der Maschine ist der wenigstens eine Sensor mit einem Eingang des maschineneigenen Steuergeräts verbunden und das maschineneigene Steuergerät durch wenigstens eine elektrische Verbindungsleitung mit einem Steuerblock des Schleppers verbunden. Durch das maschineneigene Steuergerät wird wiederum der Steuerblock des Schleppers angesteuert. Bei dieser Ausführung sind keine Eingriffe in das schleppereigene EHR-Steuergerät erforderlich.

Eine vorteilhafte und in baulich einfacher Weise zu realisierende Ausführung der Erfindung sieht vor, dass die Vorrichtung neben dem wenigstens einen an der Maschine angeordneten Sensor auch eine an dem Schlepper anordenbare Bedieneinheit umfasst. Weiterhin umfasst die Vorrichtung wenigstens eine elektrische Verbindungsleitung, mittels welcher im Betrieb der Maschine der Sensor mit der Bedieneinheit verbunden ist. Die Bedieneinheit ist wiederum mit einem Steuerblock des Schleppers verbunden, um die Steuersignale der Bedieneinheit auf den Steuerblock zu schalten. Der Steuerblock des Schleppers erhält somit seine Signale von der Bedieneinheit statt von einem schleppereigenen EHR-Steuergerät. Besonders vorteilhaft bei dieser Ausführung ist es, dass keine Eingriffe in das schleppereigene EHR-Steuergerät erforderlich sind.

Mittels den vorbeschriebenen Ausführungen ist es in besonders einfacher und kostengünstiger Weise möglich, eine Tiefenführung an einer angebauten Maschine zu realisieren, welche durch die angebaute Maschine selbst gesteuert wird und somit wesentlich exakter ist, als die übliche Führung der Anbaumaschine über die Zugkraft- bzw. Lagemessung an den Lenkern (Ober- und Unterlenker) des Krafthebers. Besonders vorteilhaft ist hierbei, dass die Vorrichtung zur Regelung der Arbeitstiefe auch leicht an bestehenden Maschinen und herkömmlichen Schleppern nachrüstbar ist, wobei die Vorrichtungen zur Regelung der Arbeitstiefe gänzlich unabhängig von dem EHR-Steuergerät des Schleppers arbeiten. Diese können somit auch dann angewandt werden, wenn Änderungen am EHR-Steuergerät nicht möglich sind. Vorteilhaft bei diesen Ausführungen ist es weiterhin, dass lediglich elektrische Verbindungsleitungen zwischen der angebauten Maschine und dem Schlepper erforderlich sind. Da die Hydraulikkomponenten der EHR des Schleppers (Tank, Pumpe, Steuerblock) weiterhin genutzt werden können, sind diese Ausführung zugleich kostengünstig auszuführen.

Es ist jedoch auch möglich, lediglich den Tank und die Pumpe der Schlepperhydraulik zu nutzen. Die maschinenseitig angeordnete Vorrichtung umfasst hierbei ein elektrisches oder elektronisches Steuergerät, einen Steuerblock mit wenigstens einem Regelventil und wenigstens einen an der Maschine angeordneten Sensor zur Erfassung der Arbeitstiefe des Anbaugeräts. Der Sensor ist hierbei mit einem Eingang des anbaugeräteeigenen Steuergeräts verbunden und das Regelventil wirkt auf den wenigstens einen Hubzylinder des Schleppers. Dadurch, dass die Vorrichtung ein eigenes Steuergerät sowie ein eigenes Regelventil beinhaltet, kann entsprechend der Erfordernisse bzw. der Ausführung des zu regelnden Werkzeugs die Steuerung in optimaler Weise an das Werkzeug angepasst werden. Eingriffe in die schleppereigene elektronische Hubwerksregelung (EHR), welche in der Regel nur vom Schlepperhersteller selbst für jeden Schlepper individuell durchgeführt werden können, sind nicht erforderlich, wobei durch das wenigstens eine Regelventil der Hubzylinder dennoch direkt angesteuert werden kann. Die Vorrichtung zur Regelung der Arbeitstiefe ist daher auch konstruktiv besonders einfach, da sie im Gegensatz zu anderen Lösungen keine zusätzlichen Stellglieder benötigt, sondern ohnehin vorhandene Hubzylinder nutzt. Die Regelung kann auch rein mechanisch auf das Steuergerät wirken. Zur Verbindung des maschineneigenen Steuerblocks mit der Pumpe sowie dem Hubzylinder des Schleppers sind hydraulische Leitungen vorgesehen. Alle Leitungen sind mit dem Schlepper über schnell trennbare Hydraulikkupplungen verbunden. Eine derartige Ausführung ist in analoger Weise auch für eine gezogene Maschine anwendbar, wobei dann das wenigstens eine Regelventil auf einen Hubzylinder der gezogenen landwirtschaftlichen Maschine wirkt.

Nach einer vorteilhaften Ausführung erfolgt die Ansteuerung des wenigstens einen Hubzylinders über Load Sensing, wofür eine weitere Steuerleitung erforderlich ist. Besonders vorteilhaft ist hierbei, dass die Hydraulikpumpe nur dann fördert, wenn der Verbraucher aktiv ist.

Besonders vorteilhaft ist es, wenn die Vorrichtung hydraulische Verbindungsleitungen sowie Hydraulikkupplungen aufweist, mittels welcher sie mit einer Pumpe der EHR des Schleppers sowie mit dem wenigstens einen Hubzylinder des Krafthebers des Schleppers verbindbar ist. Weiterhin weist die Vorrichtung eine Rücklaufleitung auf, mittels welcher sie mit einem Vorratsbehälter des Schleppers verbindbar ist. Durch die erfindungsgemäße Vorrichtung zur Regelung der Arbeitstiefe ist es möglich, das Hubwerk des Schleppers anstelle der EHR des Schleppers durch die entsprechende maschinenseitig angeordnete Vorrichtung zur Regelung der Arbeitstiefe anzusteuern. Durch die Anordnung des Sensors bzw. der Sensoren direkt im Bereich des zu regelnden Werkzeugs kann hierbei im Gegensatz zu einem Abgreifen der Messsignale an dem Hubwerk eine besonders genaue und direkte Erfassung der Arbeitstiefe bzw. der zu regelnden Parameter erfolgen. Besonders vorteilhaft ist es hierbei, dass sich hierdurch Störungen durch Schwingungen oder vorauseilende Schlepperbewegungen nicht negativ auf die Arbeitstiefe der Werkzeuge auswirken können. Die Vorrichtung kann dennoch konstruktiv einfach und kostengünstig ausgeführt werden, da sie am Schlepper ohnehin vorhandenen Einrichtungen, wie Pumpe und Rücklauf, nutzen kann.

Besonders große Vorteile lassen sich durch die erfindungsgemäße Vorrichtung zur Regelung der Arbeitstiefe bei kombinierten Maschinen erzielen, bei welchen mehrere Arbeitsgänge gleichzeitig durchgeführt werden und somit die exakte Tiefenführung der verschiedenen Werkzeuge in Bezug auf nachfolgende oder vorlaufende Werkzeuge besonders wichtig ist. Insbesondere bei kombinierten Kartoffellegemaschinen lässt sich die Erfindung in besonders vorteilhafter Weise anwenden, da die exakte Tiefenführung nicht nur in Bezug auf eventuelle Störbewegungen des Schleppers, sondern auch auf nachfolgende Werkzeuge von großer Bedeutung ist. Nach einer vorteilhaften Ausführung der Erfindung ist die landwirtschaftliche Maschine eine kombinierte Maschine mit zumindest einem Lockerungswerkzeug, einer Pflanzeinrichtung mit einem Vorratsbehälter und wenigstens einer Setzschar sowie einer nachgeordneten Einrichtung zum Enddammaufbau. Besonders vorteilhaft ist es hierbei, wenn mittels der Vorrichtung zur Regelung der Arbeitstiefe die Arbeitstiefe des Lockerungswerkzeugs regelbar ist. Hierdurch kann beim Kartoffelpflanzen erreicht werden, dass der Boden gleichmäßig bis zu einer bestimmten Tiefe aufgelockert wird, die Saatgutablage gleichmäßig in einer konstanten Tiefe erfolgt und bedingt durch die gleichmäßig tiefe Bodenlockerung gleichmäßige Dämme mit einer konstanten Überdeckung der Pflanzen entstehen.

Eine vorteilhafte Anordnung ergibt sich hierbei, wenn das Lockerungswerkzeug fest an der landwirtschaftlichen Maschine gelagert ist und mittels der Vorrichtung zur Regelung der Arbeitstiefe in seiner Arbeitstiefe geregelt wird, während die nachfolgende Setzschar und die Einrichtung zum Enddammaufbau schwimmend an der landwirtschaftlichen Maschine gelagert sind. Da das Lockerungswerkzeug in seiner Höhe konstant gegenüber dem Boden und/oder gegenüber der Setzschar gehalten wird, kann eine gleichmäßig tiefe Saatgutablage bei konstanter Überdeckung erzielt werden.

Nach einer ersten vorteilhaften Ausführung der Erfindung ist der Sensor hierzu direkt in dem Werkzeug, vorzugsweise dem Lockerungswerkzeug angeordnet und erfasst einen vertikalen Abstand des Lockerungswerkzeugs zum Boden. Vorzugsweise ist der Sensor hierbei als Ultraschallsensor ausführt.

Nach einer anderen vorteilhaften Ausführung der Erfindung erfasst der Sensor einen vertikalen Abstand des Lockerungswerkzeugs zu der Setzschar. Bei einem Abweichen dieses Abstands von einem vorgebebenen Wert, welcher vorzugsweise einstellbar ist, kann dann mittels des Hubzylinders die landwirtschaftliche Maschine derart angehoben oder abgesenkt werden, dass die Arbeitstiefe des Lockerungswerkzeugs wieder den gewünschten Wert erreicht, während das Dammformblech und die Setzschar aufgrund ihrer schwimmenden Lagerung ihre Lage beibehalten. Dabei ist sichergestellt, dass der Abstand zwischen Dammoberkante bis Ablagesohle gleich bleibt. Ebenso bleibt der Abstand von der Ablagesohle bis zum Bearbeitungshorizont gleich. Da die Kartoffelknollen vorzugsweise im gelockertem Bereich wachsen und den unbearbeiteten Boden meiden, ist eine gleich bleibende Bearbeitungstiefe unter der Ablagesohle elementar wichtig. Bei der Ernte wird das Rodeschar über die auf dem Damm laufende Dammrolle geführt. Ist dieser Abstand durch unterschiedliche Bearbeitungstiefen nicht gleich, kommt es zu Ernte- und Qualitätsverlusten durch geschnittene Knollen. Ebenso kann es bei unterschiedlichen Bearbeitungstiefen dazu kommen, dass das Rodeschar zu tief geführt wird und unbearbeiteten Boden aufnimmt. Dadurch kommen Kluten ins Erntegut, die dieses beschädigen und mit hohem Aufwand zu entfernen sind. Besonders unter nassen Bedingungen kann die Dammrolle den Unterzug auf dem aufgeweichten Damm nicht mehr abstützen. Die nasse Erde wird an die Knollen gepresst und lässt sich kaum mehr trennen. Ebenso verfängt sich das Schar im Unterboden und eine gleichmäßige Rodearbeit ist nicht mehr möglich. Diese Probleme können durch die erfindungsgemäße Vorrichtung zur Regelung der Arbeitstiefe vermieden werden. Diese Regelfunktionen sind somit notwendig, da sich durch wechselnde Bodenarten, Bodenfeuchten, Saatgutbehälterfüllstände der Boden und die Reifen unterschiedlich drücken.

Nach einer anderen vorteilhaften Ausführung der Erfindung erfasst der Sensor einen Füllstand an gelockertem Erdmaterial in der Einrichtung zum Enddammaufbau. Da der Füllstand an gelockertem Erdmaterial abhängig von der Arbeitstiefe des vorlaufenden Lockerungswerkzeugs ist, kann auch hierdurch eine konstante und exakte Tiefenführung des Lockerungswerkzeugs erfolgen.

Weiterhin ist es vorteilhaft, wenn der Sensor an einer Aufhängung der Setzschar angeordnet ist. Aufgrund der schwimmenden Lagerung der Setzschar kann der Sensor den relativen vertikalen Abstand des Lockerungswerkzeugs zu der Setzschar in günstiger Weise erfassen.

Vorteilhaft ist es, wenn die Setzschar über einen vorzugsweise auf die Aufhängung der Setzschar wirkenden Abstandshalter, beispielsweise eine Kurvenscheibe, schwimmend an der Maschine gelagert ist. Hierdurch ist trotz unterschiedlicher Bodengegebenheiten bzw. unterschiedlich tiefen Bodeneingriffs des Lockerungswerkzeugs die Setzschar in jedem Betriebszustand in einem Mindestabstand zu dem Lockerungswerkzeug gehalten und es wird eine Mindestlockerungstiefe unter der abgelegten Knolle erreicht.

Eine vorteilhafte Ausführung der Erfindung sieht hierzu vor, dass die Setzschar über eine auf die Aufhängung der Setzschar wirkende Kurvenscheibe höhenverstellbar an der landwirtschaftlichen Maschine gelagert ist und die Arbeitstiefe des Lockerungswerkzeugs in Bezug auf die Setzschar durch Verdrehen der Kurvenscheibe einstellbar ist. Hierdurch kann ein gewünschter Abstand zwischen Setzschar und Lockerungswerkzeug voreingestellt werden.

Vorteilhaft ist es weiterhin, wenn im Betrieb die Kurvenscheibe ansteuerbar bzw. verdrehbar ist, so dass bei Abweichungen von der voreingestellten Arbeitstiefe eine Nachführung des Lockerungswerkzeugs möglich ist.

Eine andere vorteilhafte Ausführung der Erfindung sieht vor, dass in Fahrtrichtung vor dem Lockerungswerkzeug eine sich in Querrichtung der landwirtschaftlichen Maschine erstreckende Walze höhenverstellbar angeordnet ist. Die Arbeitstiefe des Lockerungswerkzeugs ist somit durch Höhenverstellung der Walze voreinstellbar. Besonders vorteilhaft ist es auch hier, wenn im Betrieb die Walze verstellbar ist, um die Arbeitstiefe des Lockerungswerkzeugs auch während des Betriebs konstant zu halten. Ein Sensor kann hierbei beispielsweise auch einen vertikalen Abstand zwischen der Walze und dem Lockerungswerkzeug erfassen.

Nach einer Weiterbildung der Erfindung sind die Walze oder die Räder durch einen Hydraulikspeicher mit einem vorzugsweise einstellbaren Gewicht belastbar. So kann beispielsweise durch eine höhere Gewichtsbelastung auf der Walze oder den Breitreifen die Rückverfestigung des Bodens verbessert werden, während durch eine geringere Belastung der Walze das Gewicht auf den Schlepper verlagert wird und dort für bessere Traktion und weniger Schlupf sorgt. Vorteilhaft ist, dass auch diese Einrichtung in Verbindung mit dem maschineneigenen Steuergerät durch die ohnehin vorhandene Schlepperhydraulik versorgt werden kann.

Weiterhin kann es vorteilhaft sein, wenn an der verstellbaren Walze oder den höhenverstellbaren Rädern ein Sensor für die Tiefenregulierung der Maschine vorhanden ist.

Eine vorteilhafte Weiterbildung der Erfindung sieht vor, dass zwei oder auch mehrere Sensoren an der Maschine angeordnet sind, um die Arbeitstiefe des Lockerungswerkzeugs über verschiedene Parameter (beispielsweise Abstand Setzschar/Lockerungswerkzeug, Füllstand des Dammformblechs, Höhe über dem Boden u.a.) zu erfassen. Mittels des Steuergeräts ist dann der Sensor wählbar, über welchen die Regelung der Arbeitstiefe erfolgen soll. Ebenso sind Mischregelungen über mehrere oder alle Sensoren möglich.

Weitere Vorteile der Erfindung werden anhand der nachfolgend dargestellten Ausführungsbeispiele beschrieben. Es zeigen:
- **Fig. 1**: eine landwirtschaftliche Maschine in einer Ausführung als Aushebemaschine mit einer Vorrichtung zur Regelung der Arbeitstiefe,
- **Fig. 2**: eine Detaildarstellung der Vorrichtung zur Regelung der Arbeitstiefe mit einer Kurvenscheibe,
- **Fig. 3**: eine Detaildarstellung der Vorrichtung zur Regelung der Arbeitstiefe mit einer höhenverstellbaren Walze,
- **Fig. 4**: eine Übersichtsdarstellung einer landwirtschaftlichen Maschine in gezogener Ausführung,
- **Fig. 5**: eine erfindungsgemäße Ausführung einer landwirtschaftlichen Maschine als Aushebemaschine mit einer Vorrichtung zur Regelung der Arbeitstiefe, sowie
- **Fig. 6**: eine weitere alternative Ausführungsform einer Aushebemaschine mit einer Vorrichtung zur Regelung der Arbeitstiefe.

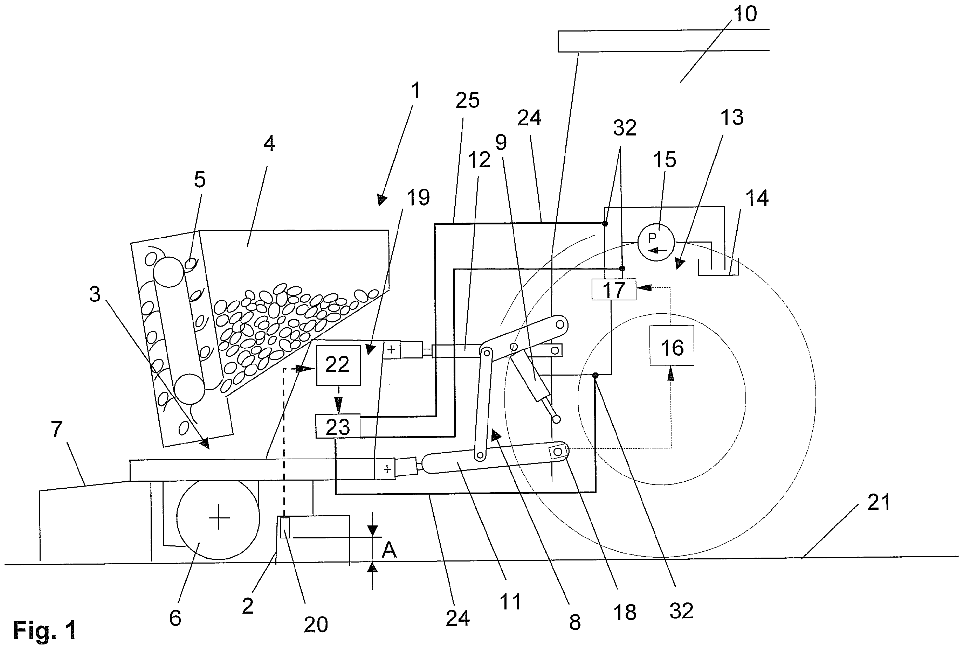

Die Fig. 1 - 3 sowie 5 und 6 zeigen eine landwirtschaftliche Maschine 1 in einer Ausführung als Aushebemaschine ohne eigenes Fahrwerk 31 in einer Übersichtsdarstellung. Vorliegend ist die landwirtschaftliche Maschine 1 als kombinierte Kartoffellegemaschine ausgebildet und verfügt über ein Lockerungswerkzeug 2, eine Pflanzeinrichtung 3 mit einem Vorratsbehälter 4, einer Entnahmeeinrichtung 5 für das Pflanzgut sowie einer Setzschar 6. Der Setzschar 6 nachgeordnet ist eine Einrichtung zum Enddammaufbau 7, welche vorliegend in Form eines Dammformblechs ausgebildet ist. Mit derartigen kombinierten Maschinen ist es möglich, die Arbeitsgänge Saatbeetbereitung, Legen und Dammaufbau in einem einzigen Arbeitsgang durchzuführen. Die exakte Tiefenführung der Werkzeuge ist hierbei von besonderer Wichtigkeit, da nur ein gleichmäßig gelockertes Erdgut die Pflanzgutablage in einer konstanten Tiefe und einen gleichmäßigen Dammaufbau mit einer gleichmäßigen Überdeckung des Pflanzguts ermöglicht.

Die Maschine ist über einen hydraulischen Kraftheber 8, welcher über zumindest einen Hubzylinder 9 verfügt, an einen Schlepper 10 ankoppelbar. Vorliegend sind mittels des wenigstens einen Hubzylinders 9 die Unterlenker 11 des Schleppers 10 anhebbar bzw. absenkbar. Ebenso kann in an sich bekannter Weise die Lage der landwirtschaftlichen Maschine 1 über den Oberlenker 12, gegebenenfalls mittels eines weiteren Hubzylinders 9, beeinflusst werden.

Der Schlepper 10 verfügt über eine herkömmliche elektronische Hubwerksregelung 13 (EHR), welche einen Hydrauliköltank 14, eine Pumpe 15, ein elektronisches Steuergerät 16 sowie einen Steuerblock 17 mit Regelventilen beinhaltet. Weiterhin umfasst die EHR 13 des Schleppers 10 wenigstens einen Sensor 18 zur Messung der Zugkraft und/oder der Lage an den Lenkern 11, 12 des Hubwerks 8. Hierdurch kann die landwirtschaftliche Maschine 1 in bekannter Weise mit Zugkraftregelung, Lageregelung, Mischregelung oder in Schwimmstellung betrieben werden.

Die Maschine 1 verfügt nun über eine maschinenseitige Vorrichtung 19 zur Regelung der Arbeitstiefe, welche im Betrieb den wenigstens einen Hubzylinder 9 des hydraulischen Krafthebers 8 entweder direkt anstelle der schleppereigenen EHR 13 oder indirekt unter Nutzung des Steuerblocks 17 der EHR beaufschlagt. Die Vorrichtung 19 umfasst hierzu zumindest einen Sensor 20, welcher vorliegend die Arbeitstiefe des Lockerungswerkzeugs 2 erfasst.

Nach der Darstellung der Fig. 1 ist der Sensor 20 direkt an dem Lockerungswerkzeug 2 angeordnet und misst die Bearbeitungstiefe des Lockerungswerkzeugs 2 gegen den Boden 21. Weiterhin umfasst die Vorrichtung 19 ein elektronisches Steuergerät 22 sowie einen Steuerblock 23 mit wenigstens einem Regelventil, welche den oder die Hubzylinder 9 des Schleppers 10 ansteuert. Mittels hydraulischer Verbindungsleitungen 24 sowie Hydraulikkupplungen 32 ist der Steuerblock 23 mit der Pumpe 15 und mit dem wenigstens einen Hubzylinder 9 verbunden. Über eine Rücklaufleitung 25 ist der Steuerblock 23 mit dem hydraulischen Öltank 14 des Schleppers 10 verbunden.

Da die Arbeitstiefe des Werkzeugs 2 direkt am Werkzeug 2 erfasst und gegebenenfalls nachgeführt wird, ist mittels der erfindungsgemäßen Vorrichtung 19 nun eine echte Tiefenführung 2 im Sinne einer konstanten Bearbeitungstiefe möglich. Im Gegensatz hierzu führten beim Stand der Technik Änderungen in der Bodenbeschaffenheit sowie Bodenunebenheiten oder vorauseilende Schlepperbewegungen zu Änderungen der an den Lenkern gemessenen Parameter und in Folge zu Schwankungen in der Bearbeitungstiefe des Lockerungswerkzeugs 2.

Die landwirtschaftliche Maschine ist hierbei dennoch konstruktiv einfach, da diese vorhandene Hydraulikkomponenten des Schleppers 10 nutzt und lediglich die Steuerung, bestehend aus Steuergerät 16 und Steuerblock 17, durch maschineneigene Einrichtungen 22 und 23 ersetzt. Die landwirtschaftliche Maschine 1 kann hierdurch in Verbindung mit beliebigen Schleppern 10 eingesetzt werden, da es lediglich erforderlich ist, die Verbindungsleitungen 24 sowie die Rücklaufleitung 25 mit den entsprechenden Hydraulikleitungen des Schleppers 10 zu verbinden. Eingriffe in das Steuergerät 16 des Schleppers 10 sind hierdurch nicht erforderlich. Grundsätzlich ist es jedoch auch denkbar, die Vorrichtung 19 zur Regelung der Arbeitstiefe der landwirtschaftlichen Maschine 1 lediglich mit einem Sensor 20 auszustatten, welcher mit einem Eingang des schleppereigenen Steuergeräts 16 verbunden ist. Als Sensor 20 ist beispielsweise ein Ultraschallsensor geeignet, welcher den Abstand A des Lockerungswerkzeugs 2 zu dem Boden 21 misst.

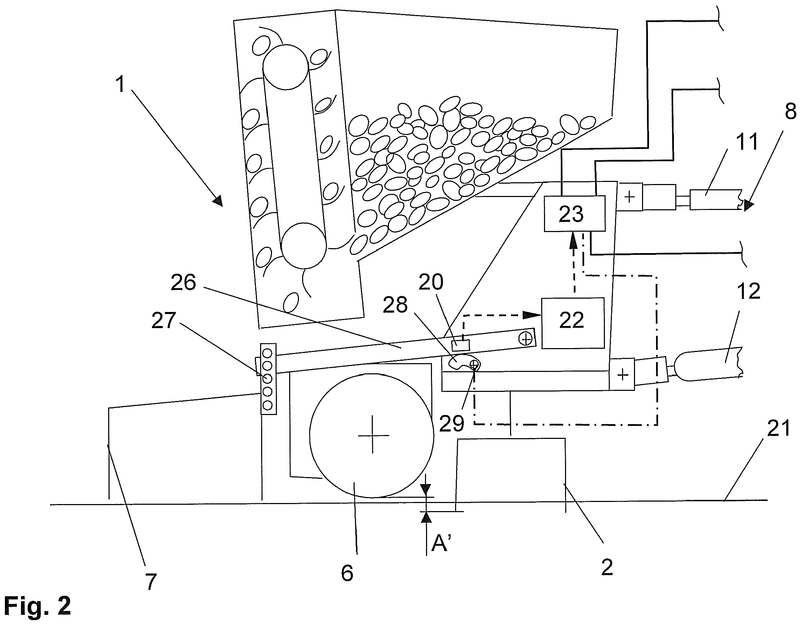

Eine Detaildarstellung einer landwirtschaftlichen Maschine 1 in Ausführung als Aushebemaschine zeigt Fig. 2. Die Setzschar 6 sowie die Vorrichtung 7 zum Enddammaufbau sind hierbei schwimmend an der landwirtschaftlichen Maschine 1 gelagert, so dass diese Bodenunebenheiten folgen können und somit stets eine konstante Arbeitstiefe in Bezug auf die Bodenoberfläche 21 erzielt werden kann. Die Setzschar 6 sowie das Dammformblech 7 sind über eine gemeinsame Aufhängung 26 an der landwirtschaftlichen Maschine 1 gelagert, so dass diese stets denselben relativen vertikalen Abstand zueinander beibehalten. Hierdurch kann erreicht werden, dass in Bezug auf den entstehenden Damm das Pflanzgut stets in derselben Pflanztiefe abgelegt wird. Wie weiterhin aus Fig. 2 ersichtlich, ist der vertikale Abstand zwischen dem Dammformblech 7 und der Setzschar 6 über eine Lochschiene 27 voreinstellbar, so dass die gewünschte Pflanztiefe einstellbar ist. Das Lockerungswerkzeug 2 ist demgegenüber fest an der landwirtschaftlichen Maschine 1 gelagert und somit über den hydraulischen Kraftheber 8 des Schleppers 10 in seiner Arbeitstiefe verstellbar.

Die Setzschar 6 liegt über der Aufhängung 26 auf einer Kurvenscheibe 28 auf. Durch ein Verdrehen der Kurvenscheibe 28 ist somit ein vertikaler Abstand A' zwischen der Setzschar 6 und dem Lockerungswerkzeug 2 einstellbar. Die Kurvenscheibe 28 ist hierzu auf einer drehbaren Welle 29 angeordnet, welche sich über die Breit der Maschine 1 erstreckt und über eine Verstelleinrichtung (nicht dargestellt) verfügt. Hierdurch ist es möglich, den vertikalen Abstand A' zwischen der Setzschar 6 und dem Lockerungswerkzeug 2 und somit die Arbeitstiefe des Lockerungswerkzeugs 2 auf ein gewünschtes Maß voreinzustellen. Wird das Lockerungswerkzeug 2 einige Zentimeter tiefer als die Setzschar 6 eingestellt, ist auch unterhalb des Pflanzguts eine gleichmäßige lockere Erdschicht vorhanden, welche das Wachstum des Pflanzguts begünstigt. Ein Sensor 20 ist hierbei im Bereich der Aufhängung 26 der Setzschar 6 angeordnet und erfasst den Abstand zur Kurvenscheibe 28, welcher wiederum ein Maß für den Abstand A' zwischen Setzschar 6 und Lockerungswerkzeug 2 bzw. ein Maß für die Arbeitstiefe des Lockerungswerkzeugs 2 darstellt.

Durch die Kurvenscheibe 28 ist es somit möglich, einen Mindestabstand zwischen der Setzschar 6 und dem Lockerungswerkzeug 2 einzustellen und eine Mindestlockerungstiefe unter der abgelegten Knolle zu erzielen. Kommt es während des Betriebs der Maschine 1, beispielsweise durch Bodenunebenheiten, zu einem Abheben der Schar 6, so wird dies von dem Sensor 20 erfasst und durch entsprechende Ansteuerung des Hubzylinders 9 des Schleppers nachgeregelt.

Weiterhin kann auch eine Nachführung dieses Abstands während des Betriebs ausgeführt werden. Die Welle 29 ist hierzu durch einen Lenker bzw. einen weiteren Zylinder, welcher durch das Steuergerät 22 und den Steuerblock 23 ansteuerbar ist (angedeutet durch eine strichpunktierte Wirklinie), angelenkt und kann in der entsprechenden Richtung verdreht werden. Die Hydraulikversorgung erfolgt auch hier durch den Schlepper. Kommt es nun während des Betriebs der Maschine 1, beispielsweise durch Bodenunebenheiten, zu einem Abheben der Schar 6, so wird dies von dem Sensor 20 erfasst und durch ein Verdrehen der Kurvenscheibe 28 nachgeregelt.

Mittels der erfindungsgemäßen landwirtschaftlichen Maschine 1 ist es somit in vorteilhafter Weise möglich, nicht nur eine exakte Tiefenführung der Werkzeuge 2 auf eine konstante Arbeitstiefe hin, unabhängig von Bodenbeschaffenheit und Bodenunebenheiten, zu gewährleisten, sondern zusätzlich auch die Bearbeitungstiefe relativ zu der Pflanztiefe bzw. eine Arbeitstiefe weiterer Werkzeuge einzustellen und diese im Betrieb konstant zu halten. Weiterhin ist es durch die Verstellung des vertikalen Abstands A' zwischen der Setzschar 6 und dem Lockerungswerkzeug 2 möglich, einen Verschleiß des Lockerungswerkzeugs 2, beispielsweise der Zinken eines Zinkenrotors, auszugleichen, indem das Lockerungswerkzeug 2 tiefer eingestellt wird.

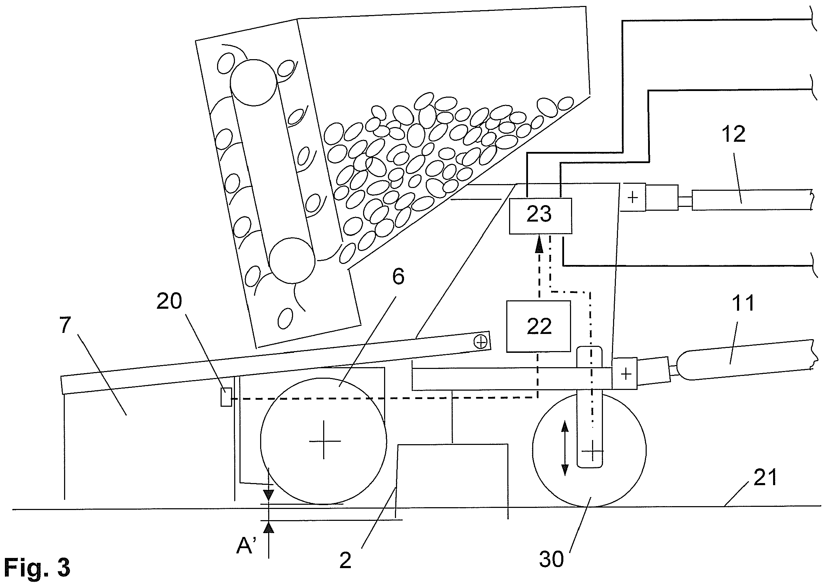

Fig. 3 zeigt eine andere Ausführung, bei welcher die Arbeitstiefe des Lockerungswerkzeugs 2 durch eine höhenverstellbar (vorliegend durch einen Doppelpfeil angedeutet) an der landwirtschaftlichen Maschine 1 angeordnete Walze 30 einstellbar ist. Die Walze 30 erstreckt sich in Querrichtung der landwirtschaftlichen Maschine in Fahrtrichtung vor dem Lockerungswerkzeug 2 und dient neben der Einstellung der Arbeitstiefe des Lockerungswerkzeugs 2 einer gleichmäßigen Zerkrümelung des Bodens 21. Ebenso wie bei der vorbeschriebenen Ausführung mit einer Kurvenscheibe 28 ist die Höhenstellung der Walze 30 über eine nicht dargestellte Verstelleinrichtung voreinstellbar. Eine Nachführung der Höhenstellung der Walze 30 während des Betriebs, um die Arbeitstiefe des Lockerungswerkzeugs 2 einzustellen, kann auch hier vorgesehen werden, indem die Verstelleinrichtung der Walze durch das Steuergerät 22 und den Steuerblock 23 ansteuerbar ist (strichpunktierte Wirklinie).

Ein Sensor 35 zur Erfassung der Arbeitstiefe des Lockerungswerkzeugs 2 ist vorliegend in dem Dammformblech bzw. der Vorrichtung zum Enddammaufbau 7 angeordnet und erfasst den Füllstand an gelockertem Erdmaterial innerhalb des Dammformblechs, welcher ebenfalls ein Maß für die Arbeitstiefe des Lockerungswerkzeugs 2 darstellt. Registriert nun der Sensor 20 beispielsweise einen zu geringen Füllstand in dem Dammformblech 7, so wird durch entsprechendes Beaufschlagen des Hubzylinders 9 die Maschine und damit das Lockerungswerkzeug 2 abgesenkt und greift somit tiefer in den Boden 21 ein. Ebenso kann bei einem zu hohen Füllstand das Lockerungswerkzeug 2 bzw. die Maschine 1 durch den Hubzylinder 9 entsprechend ausgehoben werden. Es versteht sich, dass je nach Ausführung hierzu auch mehrere Sensoren 35 in dem Dammformblech 7 angeordnet sein können, um verschiedene Füllstände korrekt zu erfassen. Eine gleichmäßige Überdeckung des abgelegten Pflanzguts bzw. ein gleichmäßiger Abstand der Unterkante der Setzschar 6 sowie der Oberkante des Dammformers 7 können hierdurch in besonders günstiger Weise gewährleistet werden. Ist eine Ansteuerung der Walze vorgesehen, so kann das Nachregeln der Arbeitstiefe zusätzlich oder statt dessen auch durch ein Höher- oder Tieferstellen der Walze 30 erfolgen.

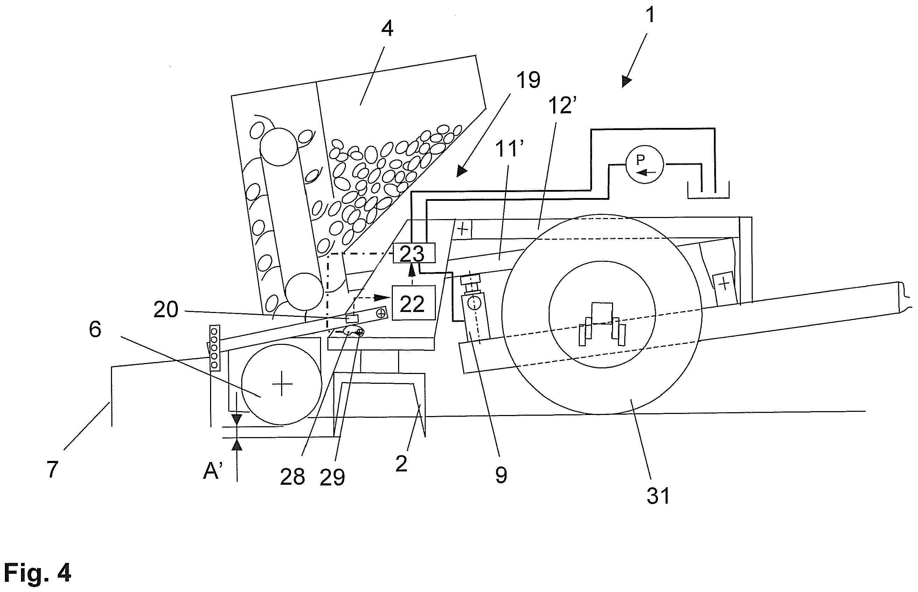

Fig. 4 zeigt eine andere vorteilhafte Ausführung, bei welcher die Landwirtschaftliche Maschine 1 als gezogene Maschine mit einem eigenen Fahrwerk 31 ausgeführt ist. Die landwirtschaftliche Maschine 1 ist hierbei an eine Anhängekupplung eines Schleppers (hier nicht dargestellt) anschließbar und verfügt über wenigstens einen Hubzylinder 9 zum Ausheben eines oder mehrerer Werkzeuge. Vorliegend sind das Lockerungswerkzeug 2, die Setzschar 6 sowie die Vorrichtung zum Enddammaufbau 7 einem ersten Lenker 12' angeordnet, während der Vorratsbehälter 4 an einem zweiten Lenker 11' angeordnet ist. Analog zu der in Fig. 2 dargestellten Ausführung einer Aushebemaschine sind hierbei wiederum das Dammformblech 7 und die Setzschar 6 fest, jedoch in ihrer relativen Höhe zueinander verstellbar miteinander verbunden und schwimmend an der Maschine 1 gelagert. Das Lockerungswerkzeug 2 ist hingegen fest an der Maschine 1 angeordnet und über den Hubzylinder 9 entsprechend absenkbar oder aushebbar. Die Einstellung des Abstands A' zwischen dem Lockerungswerkzeug 2 und der Setzschar 6 erfolgt wie in Fig. 2 beschrieben über eine an einer drehbaren Welle 29 angeordnete Kurvenscheibe 28.

Bei herkömmlichen Maschinen 1 in gezogener Ausführung des Stands der Technik war es hierbei mittels eines Hubzylinders 9 lediglich möglich, das Lockerungswerkzeug 2 manuell etwas höher oder etwas tiefer einzustellen. Die erfindungsgemäße Maschine 1 beinhaltet demgegenüber eine Vorrichtung 19 zur Regelung der Arbeitstiefe des Lockerungswerkzeugs 2, wie unter Fig. 2 beschrieben. Weiterhin kann auch bei dieser Ausführung die Welle 29 im Betrieb entsprechend verdrehbar sein, um den Abstand A' zwischen dem Lockerungswerkzeug 2 und der Setzschar 6 auf ein gewünschtes konstantes Maß hin zu regeln. Die Wirkverbindung zwischen der Welle 29 und dem Steuergerät 22 und dem Steuerblock 23 ist wiederum durch eine strichpunktierte Linie dargestellt. Da bei der gezeigten Anordnung in einer gezogenen Maschine die Arbeitstiefe des Lockerungswerkzeugs 2 auch stark von der Füllung der Vorratsbehälters 4 abhängt, welcher sich mit seinem Gewicht auch auf dem Lockerungswerkzeug abstützt, kann mittels der erfindungsgemäßen Vorrichtung 19 trotz stark schwankender Füllstände eine konstante Arbeitstiefe der Werkzeuge erreicht werden.

Bei den vorbeschriebenen Ausführungsbeispielen waren stets hydraulische Verbindungsleitungen 24 zwischen dem Schlepper und der angebauten oder angehängten Maschine vorgesehen, um unter Nutzung von ohnehin vorhandenen Hydraulikkomponenten des Schleppers eine verbesserte Regelung der Arbeitstiefe zu realisieren.

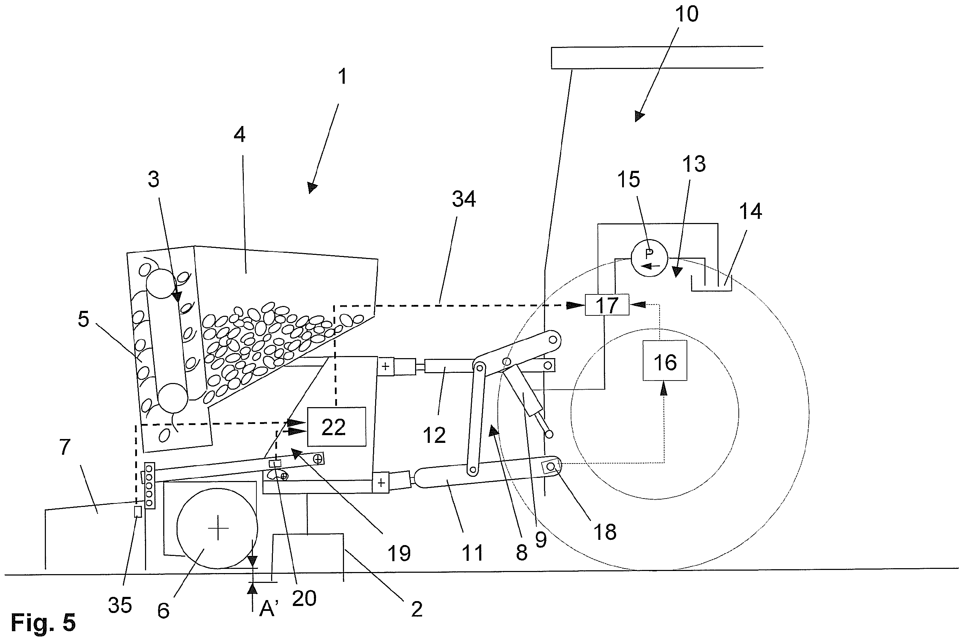

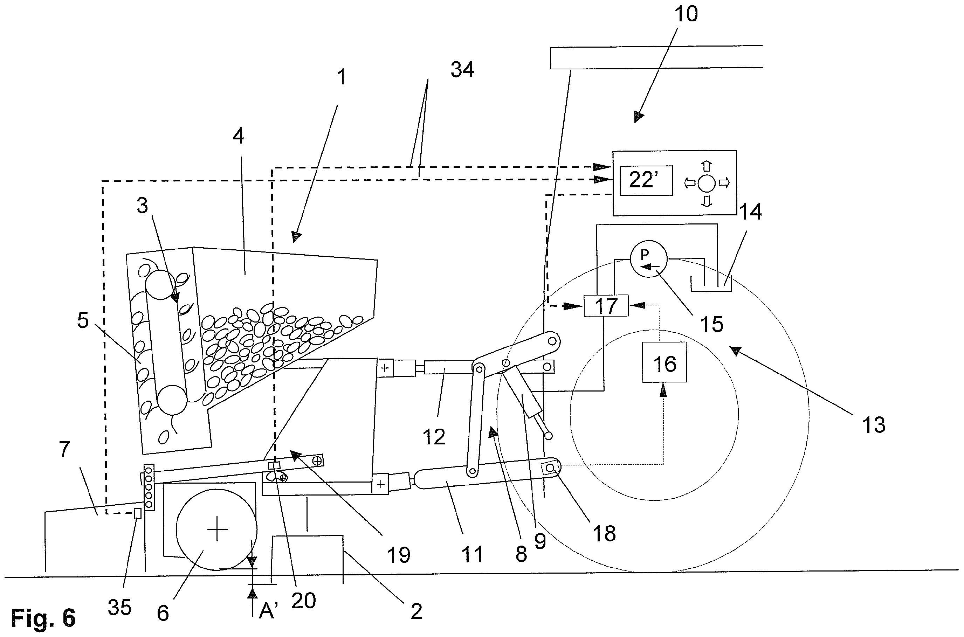

In besonders einfacher Weise kann eine verbesserte Regelung der Arbeitstiefe erfindungsgemäß jedoch auch erzielt werden, wenn, wie in Fig. 5 und 6 gezeigt, der Steuerblock 23 an der Maschine eingespart wird und statt dessen der Steuerblock 17 des Schleppers 10 durch die Vorrichtung 19 beaufschlagt wird. Nach Figur 5 beinhaltet die Vorrichtung 19 hierzu einen Sensor 20 zur Erfassung des Abstands A' zwischen Setzschar 6 und Lockerungswerkzeug 2 sowie einen Sensor 35 zur Erfassung des Füllstands in dem Dammformblech 7. Weiterhin umfasst die Vorrichtung 19 ein maschineneigenes Steuergerät 22, welches die Sensorsignale verarbeitet (vgl. dicke, strichpunktierte Linien) und welches durch eine elektrische Verbindungsleitung 34 mit dem Steuerblock 17 des Schleppers 10 verbunden ist. Das maschineneigene Steuergerät 22 beaufschlagt somit den Steuerblock 17 anstelle des Steuergeräts 16 des Schleppers 10. An dem Steuergerät 22 kann hierbei voreingestellt werden, ob die Regelung nach dem Abstand A' zwischen Setzschar 6 und Lockerungswerkzeug 2 oder nach dem Füllstand in dem Dammformblech 7 erfolgen soll, welche beide ein Maß für die Arbeitstiefe des Lockerungswerkzeugs darstellen. Ebenso ist eine Mischregelung möglich.

Nach einer nicht dargestellten Variante können ähnlich der Ausführung der Fig. 5 die Signale der Sensoren 20 ,35 auch direkt auf den Steuerblock 17 des Schleppers 10 geschalten werden. In diesem Fall umfasst die Vorrichtung 19 zur Regelung der Arbeitstiefe lediglich die Sensoren 20, 35, unter Umständen sogar nur einen einzigen Sensor 20. Geeignete Sensoren 20, beispielsweise Ultraschallsensoren, sind hierbei, ggf. durch in den Sensor 20 integrierte Schaltungen zur Signalverarbeitung, in der Lage ein, Signal auszugeben, das direkt zur Ansteuerung des Steuerblocks geeignet ist. Vorteilhaft bei dieser Ausführung ist, dass sie in einfachster Weise an vorhandenen Maschinen nachrüstbar ist, da lediglich eine elektrische Verbindungsleitungen 34 von dem oder den Sensoren 20, 35 an der Maschine 1 zu dem Steuerblock 17 des Schleppers erforderlich ist.

Eine andere vorteilhafte Ausführung der Erfindung ist in Fig. 6 gezeigt. Die Vorrichtung 19 umfasst hierbei zumindest einen Sensor 20, vorliegend jedoch ebenfalls zwei Sensoren 20 und 35, welche die Arbeitstiefe des Lockerungswerkzeugs 2 bzw. eine korrespondierende Größe messen. Weiterhin umfasst die Vorrichtung 19 elektrische Verbindungsleitungen 34 sowie eine Bedieneinheit 33. Die Bedieneinheit 33 beaufschlagt wiederum den Steuerblock 17 des Schleppers 10 anstelle des Steuergeräts 16. Vorliegend ist die Bedieneinheit 33 nach Art eines Joysticks ausgeführt und beinhaltet vier verschiedenen Schaltpositionen, wie durch die vier Pfeile angedeutet. Nach einer ersten Schaltposition kann die Maschine durch den Bediener manuell gesenkt und nach einer weiteren Schaltposition manuell angehoben werden. Zwei weitere Schaltpositionen sind als Rastpositionen ausgeführt und ermöglichen eine automatische Regelung der Arbeitstiefe wie in den vorherigen Ausführungsbeispielen beschrieben.

Nach einer ersten Ausführung erfolgt die Regelung nach dem Abstand A' zwischen Setzschar 6 und Lockerungswerkzeug 2. Der Sensor 20 wird in dieser Rastposition durch eine elektrische Verbindungsleitung 34 bestromt und gibt ein dem Abstand A' entsprechendes Signal an die Bedieneinheit 33 aus, welche wiederum den Steuerblock 17 entsprechend beaufschlagt.

Vorzugsweise ist der Sensor 20 als Wegsensor ausgeführt und beinhaltet drei Bereiche. Von 0 % - 25 % des Weges wird die Maschine abgesenkt und von 75 % - 100 % des Weges wird die Maschine angehoben. Von 25 % - 75 % des Weges, also in einem mittleren Bereich, welcher einer optimalen Tiefe der Werkzeuge entspricht, wird hingegen kein Signal ausgegeben. Hierdurch kann ein ständiges Nachregeln, welches zu unerwünschten Schwingungen führen kann, wirkungsvoll verhindert werden.

In der zweiten Rastposition erfolgt hingegen eine Mischregelung nach dem Abstand A' zwischen Setzschar 6 und Lockerungswerkzeug 2 und dem Füllstand in dem Dammformblech 7. In dieser Position werden die beiden Sensoren 20 und 35 mit Strom versorgt und die Maschine entsprechend angehoben oder abgesenkt.

Die Bedieneinheit 33 beinhaltet nach der beschriebenen Ausführung ein Steuergerät 22' zur Verarbeitung der Sensorsignale und leitet das Steuersignal dann an den Steuerblock 17 des Schleppers weiter. Im Gegensatz zu der in Figur 5 gezeigten Ausführung ist es hierbei auch möglich, durch die Bedieneinheit 33 weitere Regelungsfunktionen zu integrieren. Es ist jedoch auch bei dieser Ausführung mit einer Bedieneinheit 33 möglich, Sensoren 20, 35 zu verwenden, deren Signal direkt zur Ansteuerung des Steuerblocks 17 geeignet ist. In diesem Fall werden die Sensorsignale lediglich durch die Bedieneinheit 33 an den Steuerblock 17 weiterleitet, so dass lediglich elektrische Verbindungsleitungen 34 von der Bedieneinheit 33 zu den Sensoren 20, 35 erforderlich sind und die Verkabelung besonders einfach realisiert werden kann.

Nach einer anderen, nicht dargestellten Abwandlung ist es jedoch ebenso möglich, dass die Maschine 1 wie in Figur 5 dargestellt, ein maschineneigenes Steuergerät 22 aufweist, welches den Steuerblock 17 des Schleppers 10 beaufschlagt, wenn an der Bedieneinheit 33 die entsprechende Rastposition vorgewählt ist. Das Steuergerät 22 ist dann ebenfalls über die Verbindungsleitungen 34 mit der Bedieneinheit 33 verbunden, welche die Steuersignale lediglich zu dem Steuerblock 17 des Schleppers 10 durchleitet.

Um Fehlerströme und hierdurch hervorgerufene Fehlfunktionen sowie Schäden am Steuergerät 16 des Schleppers 10 zu vermeiden, wird vorzugsweise die Verbindung des Steuergeräts 16 zu dem Steuerblock 17 getrennt, wie durch die nur dünn dargestellten, gestrichelten Linien angedeutet.

Besonders vorteilhaft bei den Ausführungen nach Figur 5 und 6 ist es, dass kein Steuerblock 23 an der Maschine 1 erforderlich ist, sondern der ohnehin vorhandene Steuerblock 17 des Schleppers 10 genutzt werden kann. Ebenso werden lediglich elektrische Verbindungsleitungen 34 benötigt, welche in einfacher Weise mittels Stecker an- und abklemmbar sind.

Allen gezeigten Ausführungen gemein ist jedoch, dass ein oder mehrere Hubzylinder 9 des Schleppers 10 unter Ausschaltung des schleppereigenen Steuergeräts 16 durch die Anbaumaschine 1 entweder direkt oder über den Steuerblock 17 des Schleppers 10 angesteuert wird. Softwareeingriffe in das Steuergerät 16 sind hierbei jedoch nicht erforderlich, so dass die Anbaumaschine 1 mit jedem beliebigen Schlepper eingesetzt werden kann. Ebenso kann der Schlepper 10 in herkömmlicher Weise für andere Arbeiten genutzt werden, da keinerlei Veränderungen an dem Steuergerät 16 vorgenommen werden. Die Umstellung ist mittels eines einfachen Mehrfachsteckers möglich, der am Steuerblock 17 der EHR angebracht ist.

### Bezugszeichenliste

- 1: Landwirtschaftliche Maschine
- 2: Lockerungswerkzeug
- 3: Pflanzvorrichtung
- 4: Vorratsbehälter
- 5: Entnahmeeinrichtung
- 6: Setzschar
- 7: Vorrichtung zum Enddammaufbau
- 8: Hydraulischer Kraftheber
- 9: Hubzylinder
- 10: Schlepper
- 11: Unterlenker
- 12: Oberlenker
- 13: Elektronische Hubwerksregelung (EHR)
- 14: Hydrauliköltank
- 15: Pumpe
- 16: Elektronisches Steuergerät des Schleppers
- 17: Steuerblock des Schleppers
- 18: Sensor
- 19: Vorrichtung zur Regelung der Arbeitstiefe
- 20: Sensor der Maschine
- 21: Boden
- 22: Elektronisches Steuergerät der Maschine
- 23: Steuerblock der Maschine
- 24: Hydraulische Verbindungsleitungen
- 25: Rücklaufleitung
- 26: Aufhängung
- 27: Lochschiene
- 28: Kurvenscheibe
- 29: Welle
- 30: Walze
- 31: Fahrwerk
- 32: Hydraulikkupplungen
- 33: Bedieneinheit
- 34: Elektrische Verbindungsleitungen
- 35: Füllstandssensor
- A,A': Abstand

## Patentansprüche

1. Landwirtschaftliche Maschine (1) mit wenigstens einem Werkzeug (2), wobei die landwirtschaftliche Maschine (1) als Aushebemaschine an einen hydraulischen Kraftheber (8) eines Schleppers (10) anschließbar ist, und wobei das Werkzeug (2) und/oder die landwirtschaftliche Maschine (1) über wenigstens einen Hubzylinder (9) des hydraulischen Krafthebers (8) des Schleppers (10) aushebbar und absenkbar ist, wobei der Schlepper über eine elektronische Hubwerksregelung (EHR) mit einem elektronischen Steuergerät (16) und einem hydraulischen Steuerblock (17) mit Regelventilen verfügt, wobei an der Maschine (1) eine maschineneigene Vorrichtung (19) zur Regelung der Arbeitstiefe des wenigstens einen Werkzeugs (2) angeordnet ist, welche wenigstens einen an der Maschine (1) angeordneten Sensor (20) zur Erfassung der Arbeitstiefe des Werkzeugs (2) **dadurch gekennzeichnet, dass** die Vorrichtung (19) zur Regelung der Arbeitstiefe ebenfalls ein maschineneigenes elektrisches oder elektronisches Steuergerät (22) umfasst, und dass die Vorrichtung (19) im Betrieb der Maschine (1) den wenigstens einen Hubzylinder (9) des hydraulischen Krafthebers (8) ansteuert, wobei im Betrieb der Maschine (1) der wenigstens eine Sensor (20) mit einem Eingang des maschineneigenen Steuergeräts (22) verbunden ist und das maschineneigene Steuergerät (22) durch wenigstens eine elektrische Verbindungsleitung (34) mit dem hydraulischen Steuerblock (17) des Schleppers (10) verbunden ist, und wobei das maschineneigene Steuergerät (22) den Steuerblock (17) des Schleppers anstelle des Steuergeräts (16) des Schleppers beaufschlagt.

2. Landwirtschaftliche Maschine nach Anspruch 1, **dadurch gekennzeichnet, dass** die Vorrichtung (19) eine an dem Schlepper (10) anordenbare Bedieneinheit (33) umfasst, wobei im Betrieb der Maschine (1) das Steuergerät (22)durch eine elektrische Verbindungsleitung (34) mit der Bedieneinheit (33) verbunden ist und wobei die Bedieneinheit (33) mit einem Steuerblock (17) des Schleppers (10) verbunden ist.

3. Landwirtschaftliche Maschine nach einem der vorhergehenden Ansprüche, **dadurch gekennzeichnet, dass** die landwirtschaftliche Maschine (1) eine kombinierte Maschine ist und zumindest ein Lockerungswerkzeug (2), eine Pflanzeinrichtung (3) mit einem Vorratsbehälter (4) und wenigstens einer Setzschar (6) sowie eine nachgeordnete Einrichtung zum Enddammaufbau (7) aufweist, wobei die Setzschar (6) und die Einrichtung zum Enddammaufbau (7) schwimmend an der landwirtschaftlichen Maschine (1) gelagert sind und das Lockerungswerkzeug (2) fest der landwirtschaftlichen Maschine (1) gelagert ist, und dass mittels der Vorrichtung zur Regelung der Arbeitstiefe (19) die Arbeitstiefe des Lockerungswerkzeugs (2) regelbar ist.

4. Landwirtschaftliche Maschine nach dem vorhergehenden Anspruch, **dadurch gekennzeichnet, dass** der Sensor (20), vorzugsweise ein Ultraschallsensor, einen vertikalen Abstand des Lockerungswerkzeuges (2) zum Boden (21) erfasst.

5. Landwirtschaftliche Maschine nach Anspruch 3, **dadurch gekennzeichnet, dass** der Sensor (20) einen vertikalen Abstand des Lockerungswerkzeuges (2) zu der Setzschar (6) erfasst, wobei der Sensor (20) vorzugsweise an einer Aufhängung (26) der Setzschar (6) angeordnet ist.

6. Landwirtschaftliche Maschine nach einem der vorhergehenden Ansprüche, **dadurch gekennzeichnet, dass** ein Sensor (35) einen Füllstand an gelockertem Erdmaterial in der Einrichtung zum Enddammaufbau (7) erfasst.

7. Landwirtschaftliche Maschine nach einem der Ansprüche 3 - 6, **dadurch gekennzeichnet, dass** die Setzschar (6) über einen vorzugsweise auf die Aufhängung (26) der Setzschar (6) wirkenden Abstandshalter, insbesondere eine Kurvenscheibe (28), in jedem Betriebszustand in einem Mindestabstand zu dem Lockerungswerkzeug (2) gehalten ist.

8. Landwirtschaftliche Maschine nach einem der Ansprüche 3 - 7, **dadurch gekennzeichnet, dass** die Setzschar (6) über eine auf die Aufhängung (26) der Setzschar (6) wirkende Kurvenscheibe (28) höhenverstellbar an der landwirtschaftlichen Maschine (1) gelagert ist und die Arbeitstiefe des Lockerungswerkzeugs (2) in Bezug auf die Setzschar (6) durch Verdrehen der Kurvenscheibe (28) einstellbar, vorzugsweise auch im Betrieb einstellbar ist

9. Landwirtschaftliche Maschine nach einem der vorhergehenden Ansprüche, **dadurch gekennzeichnet, dass** in Fahrtrichtung vor dem Lockerungswerkzeug (2) eine sich in Querrichtung der landwirtschaftlichen Maschine (1) erstreckende Walze (30) und/oder mehrere, nebeneinander angeordnete Räder höhenverstellbar an der landwirtschaftlichen Maschine (1) angeordnet ist/sind und die Arbeitstiefe des Lockerungswerkzeugs (2) durch Höhenverstellung der Walze oder der Räder (30) einstellbar ist, vorzugsweise auch im Betrieb verstellbar ist.

10. Landwirtschaftliche Maschine nach dem vorhergehenden Anspruch, **dadurch gekennzeichnet, dass** an der verstellbaren Walze (30) oder den höhenverstellbaren Rädern ein Sensor für die Tiefenregulierung der Maschine vorhanden ist.

11. Landwirtschaftliche Maschine nach einem der Ansprüche 9 oder 10, **dadurch gekennzeichnet, dass** die Walze (30) oder die Räder durch einen Hydraulikspeicher mit einem vorzugsweise einstellbaren Gewicht belastbar ist/sind.

12. Landwirtschaftliche Maschine nach einem der vorhergehenden Ansprüche, **dadurch gekennzeichnet, dass** wenigstens zwei Sensoren (10,35) an der Maschine angeordnet sind und die Arbeitstiefe durch eine Mischregelung zwischen zwei oder mehreren Sensoren regelbar ist.

## Claims

1. An agricultural machine (1) having at least one tool (2), the agricultural machine (1) being connectable as a lifting machine to a hydraulic power lift (8) of a tractor (10), and the tool (2) and/or the agricultural machine (1) being liftable and lowerable by means of at least one lift cylinder (9) of the hydraulic power lift (8) of the tractor (10), the tractor comprising an electronic lifting unit controller (EHR) having an electronic control device (16) and a hydraulic control block (17) having control valves, a machine-associated device (19) for controlling the working depth of the at least one tool (2) being disposed on the machine (1) and comprising at least one sensor (20) disposed on the machine (1) for capturing the working depth of the tool (2), **characterized in that** the device (19) for controlling the working depth also comprises a machine-associated electrical or electronic control device (22), and that the device (19) actuates the at least one lift cylinder (9) of the hydraulic power lift (8) during operation of the machine (1), wherein the at least one sensor (20) is connected to an input of the machine-associated control device (22) during operation of the machine (1), and the machine-associated control device (22) is connected to the hydraulic control block (17) of the tractor (10) by means of at least one electrical connecting line (34), and wherein the machine-associated control device (22) impinges on the control block (17) of the tractor in place of the control device (16) of the tractor.

2. The agricultural machine according to claim 1, **characterized in that** the device (19) comprises an operation control unit (33) for disposing on the tractor (10), wherein the control device (22) is connected to the operation control unit (33) by an electrical connecting line (34) during operation of the machine (1), and wherein the operation control unit (33) is connected to a control block (17) of the tractor (10).

3. The agricultural machine according to any one of the preceding claims, **characterized in that** the agricultural machine (1) is a combined machine and comprises at least one loosening tool (2), one planting device (3) having a storage container (4), and at least one setting plough (6) and a device for building up an end dam (7) disposed downstream thereof, wherein the setting plough (6) and the device for building up an end dam (7) are floatingly supported on the agricultural machine (1) and the loosening tool (2) is fixedly supported on the agricultural machine (1), and that the working depth of the loosening tool (2) can be controlled by means of the device for controlling the working depth (19).

4. The agricultural machine according to the preceding claim, **characterized in that** the sensor (20), preferably an ultrasonic sensor, captures a vertical spacing between the loosening tool (2) and the ground (21).

5. The agricultural machine according to claim 3, **characterized in that** the sensor (20) captures a vertical spacing between the loosening tool (2) and the setting plough (6), wherein the sensor (20) is preferably disposed on a suspension (26) of the setting plough (6).

6. The agricultural machine according to any one of the preceding claims, **characterized in that** a sensor (35) captures a fill level of loosened soil material in the device for building up an end dam (7).

7. The agricultural machine according to any one of the claims 3-6, **characterized in that** the setting plough (6) is held at a minimum spacing from the loosening tool (2) in all operating states by means of a spacer, particularly a cam disc (28), preferably acting on the suspension (26) of the setting plough (6).

8. The agricultural machine according to any one of the claims 3-7, **characterized in that** the setting plough (6) is supported on the agricultural machine (1) in a height-adjustable manner by means of a cam disc (28) acting on the suspension (26) of the setting plough (6), and the working depth of the loosening tool (2) with respect to the setting plough (6) can be adjusted by rotating the cam disc (28), preferably also during operation.

9. The agricultural machine according to any one of the preceding claims, **characterized in that** a roller (30) extending in the transverse direction of the agricultural machine (1) and/or a plurality of wheels disposed adjacent to each other is/are disposed on the agricultural machine (1) ahead of the loosening tool (2) in the direction of travel in a height-adjustable manner, and the working depth of the loosening tool (2) can be adjusted by adjusting the height of the roller or the wheels (30), preferably also during operation.

10. The agricultural machine according to the preceding claim, **characterized in that** a sensor for controlling the depth of the machine is disposed on the adjustable roller (30) or the height-adjustable wheels.

11. The agricultural machine according to any one of the claims 9 or 10, **characterized in that** the roller (30) or the wheels can be loaded to a preferably adjustable weight by a hydraulic accumulator.

12. The agricultural machine according to any one of the preceding claims, **characterized in that** at least two sensors (10, 35) are disposed on the machine and the working depth can be controlled by mixed control between two or more sensors.

## Revendications

1. Machine agricole (1) comportant au moins un outil (2), la machine agricole (1) pouvant être reliée en tant que machine de levage à un relevage hydraulique (8) d'un tracteur (10), et l'outil (2) et/ou la machine agricole (1) pouvant être relevé(s) et abaissé(s) par au moins un vérin de levage (9) du relevage hydraulique (8) du tracteur (10), le tracteur possédant une commande de mécanisme de levage électronique (EHR) avec un appareil de commande électronique (16) et un bloc de commande hydraulique (17) avec des vannes de commande, un dispositif (19) propre à la machine pour régler la profondeur de travail de l'au moins un outil (2) étant disposé sur la machine (1), lequel dispositif comporte au moins un capteur (20) disposé sur la machine (1) pour détecter la profondeur de travail de l'outil (2), **caractérisée en ce que** le dispositif (19) pour la régulation de la profondeur de travail comprend également un appareil de commande (22) électrique ou électronique propre à la machine, et **en ce que** le dispositif (19) commande l'au moins un vérin de levage (9) du relevage hydraulique (8) pendant le fonctionnement de la machine (1), dans laquelle, pendant le fonctionnement de la machine (1), le au moins un capteur (20) est relié à une entrée de l'appareil de commande (22) propre à la machine et l'appareil de commande (22) propre à la machine est reliée au bloc de commande hydraulique (17) du tracteur (10) par au moins une ligne de connexion électrique (34), et dans laquelle l'appareil de commande (22) propre à la machine agit sur le bloc de commande (17) du tracteur au lieu de l'appareil de commande (16) du tracteur.

2. Machine agricole selon la revendication 1, **caractérisée en ce que** le dispositif (19) comprend une unité de commande (33) qui peut être disposée sur le tracteur (10), sachant que, pendant le fonctionnement de la machine (1), l'appareil de commande (22) est relié à l'unité de commande (33) par une ligne de connexion électrique (34) et sachant que l'unité de commande (33) est reliée à un bloc de commande (17) du tracteur (10).

3. Machine agricole selon l'une des revendications précédentes, **caractérisée en ce que** la machine agricole (1) est une machine combinée et comporte au moins un outil d'ameublissement (2), un dispositif de plantation (3) avec un réservoir de stockage (4) et au moins un soc planteur (6) ainsi qu'un dispositif en aval pour la constitution de la butte d'extrémité (7), le soc planteur (6) et le dispositif pour la constitution de la butte d'extrémité (7) étant montés sur palier flottant sur la machine agricole (1) et l'outil d'ameublissement (2) étant monté de manière fixe sur la machine agricole (1), et **en ce que** la profondeur de travail de l'outil d'ameublissement (2) peut être réglée au moyen du dispositif de réglage de la profondeur de travail (19).

4. Machine agricole selon la revendication précédente, **caractérisée en ce que** le capteur (20), de préférence un capteur à ultrasons, capte une distance verticale de l'outil d'ameublissement (2) à partir du sol (21).

5. Machine agricole selon la revendication 3, **caractérisée en ce que** le capteur (20) capte une distance verticale de l'outil d'ameublissement (2) à partir du soc planteur (6), sachant que le capteur (20) est de préférence disposé sur une suspension (26) du soc planteur (6).

6. Machine agricole selon l'une des revendications précédentes, **caractérisée en ce qu'**un capteur (35) capte un niveau de remplissage en terre ameublie dans le dispositif pour la constitution de la butte d'extrémité (7).

7. Machine agricole selon l'une des revendications 3-6, **caractérisée en ce que** le soc planteur (6) est maintenu à une distance minimale de l'outil d'ameublissement (2) dans chaque état de fonctionnement via un écarteur, en particulier un disque à cames (28), agissant de préférence sur la suspension (26) du soc planteur (6).

8. Machine agricole selon l'une des revendications 3-7 , **caractérisée en ce que** le soc planteur (6) est monté sur la machine agricole (1) de manière réglable en hauteur via un disque à cames (28) agissant sur la suspension (26) du soc planteur (6) et que la profondeur de travail de l'outil d'ameublissement (2) par rapport au soc planteur (6) est réglable par rotation du disque à cames (28), de préférence, également pendant le fonctionnement.

9. Machine agricole selon l'une des revendications précédentes, **caractérisée en ce qu'**un rouleau (30) s'étendant dans le sens transversal de la machine agricole (1) et/ou plusieurs roues disposées côte à côte sont disposées sur la machine agricole (1) devant l'outil d'ameublissement (2) dans le sens de déplacement, de manière réglable en hauteur, et la profondeur de travail de l'outil d'ameublissement (2) est réglable en hauteur par réglage en hauteur du rouleau ou des roues (30), de préférence, également pendant le fonctionnement.

10. Machine agricole selon l'une des revendications précédentes, **caractérisée en ce qu'**un capteur pour le réglage de la profondeur de la machine existe sur le rouleau réglable (30) ou les roues réglables en hauteur.

11. Machine agricole selon l'une des revendications 9 ou 10, **caractérisée en ce que** le rouleau (30) ou les roues peuvent être chargés par un accumulateur hydraulique avec un poids de préférence réglable.

12. Machine agricole selon l'une des revendications précédentes, **caractérisée en ce que** deux capteurs (10, 35) au moins sont disposés sur la machine et la profondeur de travail peut être réglée par une commande proportionnelle entre deux ou plusieurs capteurs.
